# EUROPEAN PATENT APPLICATION

(11) **EP 1 201 976 A2**
(43) Date of publication of application: **02.05.2002**
(21) Application number: 01203408.8
(22) Date of filing: 10.09.2001
(51) Int. Cl.: F16K 1/30

(54) **Take out valve for kegs containing pressurized liquids**

(30) Priority: 22.09.2000 IT MI002067
(71) Applicant: O.D.L. S.r.l., 23827 Lierna (LC) (IT)
(72) Inventor: Pensa, Carlo Maria, 22050 Esino Lario, Como (IT)
(74) Representative: Riccardi, Sergio

(57) **Abstract**

An extraction valve for kegs containing pressurized liquids is disclosed, comprising a threaded ring (3) at one coupling end with a keg (2) and having at the other end a body (4) with its lateral surface shaped by a plurality of ports (5), said ring being associated at its bottom with a valve body (6) to which a plug (7) is superposed which is associated to a first spring (9) inside a draft pipe (10) associated to said valve body (6), wherein outside said pipe (10) a second spring (11) is associated in turn in contact with a washer (12) that when mounted is connected to the body (4) of the ring (3), said body (4) being operatively associated to an anti-ejection safety device, characterized in that said safety device comprises a hook (13) having one or more projecting walls (14) adapted to be coupled with some of said ports (5), and a plane (15) adapted to rest on said washer (12) opposing the outer wall of said pipe (10), wherein on said plane said second spring (11) is resting, so that the elastic force of the second spring (11) keeps said hook (13) in position during operation of said extraction valve (1).

## Description

The present invention relates to an extraction valve for kegs containing pressurized liquids.

More particularly said valves for kegs containing pressurized liquids.

More particularly said valves are provided for extracting beer or other beverages from a keg by using a pressurized gas, and have a safety device preventing its accidental ejection when uncoupling the valve from the keg.

This problem was the reason of several accidents occurred to costumers and personnel of various places when replacing the keg.

Indeed it was possible that once the liquid to be extracted was exhausted, inside the keg a quantity of pressurized gas was still present. When unscrewing the extraction valve that was without a safety system keeping it coupled to the keg, the valve could be ejected violently and hit the operator even with serious consequences.

Therefore extraction valves provided with a safety system or device preventing their uncontrolled ejection due to residual gases in the keg have been deviced since some time.

These valves were provided generally with a hook or detent opposing the filling union above the keg that could be retracted with a proper wrench so as to allow after gas ejection, extraction of the valve from the union.

More particularly some known valves are provided with devices having a tab with a movement connected with the draft pipe, acting on proper hook planes so that a stroke longer than the normal working stroke causes the hook to be retracted.

Other known valves have a different solution, that is the hook is cleared from the operation of the valve, being fixed to a wall of said valve through two upset hooking points and a retaining spring connected with the hook so that it is possible to act on the hook for its retraction only with a proper wrench.

Although these extraction valves solve the above mentioned technical problem, however they have some drawbacks.

The valves having the tab connected with the draft pipe acting on the hook, limit the freedom of movement of the pipe and the valve has a more critical tightness.

The valves clearing the hook from the operation of the valve have constructional limits because it is necessary to make said hook with a thin sheet as a portion of the hook must operate as a spring. Moreover if the hook is damaged at the extraction, this fact being rather probable, special tools are required for its replacement that are not on hand of the average user, so that maintenance could become particularly expensive.

The object of the present invention is to remove the drawbacks of the prior art valves.

Object of the present invention is therefore to provide for a strong and reliable extraction valve for kegs containing pressurized liquids, whose assembling and removal are not causing problems to the user.

Briefly the present invention provides for an extraction valve for kegs containing pressurized liquids comprising a threaded ring coupled at one end with a keg and having at the other end a body with its lateral surface shaped by a plurality of ports, said ring being associated at its bottom with a valve body to which a plug is superposed and associated to a first spring inside a draft pipe associated to said valve body, wherein outside said pipe a second spring is associated in turn in contact with a washer that when mounted is coupled to the ring body, said body being operatively associated to an anti-ejection safety device, wherein said safety device comprises a hook having one or more projecting walls adapted to be coupled with some of said ports, and a plane adapted to rest on said washer opposing the outer wall of said pipe, where on said plane said second spring is resting, so that the elastic force of the second spring keeps said hook in position during operation of said extraction valve.

The extraction valve for kegs containing pressurized liquids according to the invention is characterized by the features set forth in claim 1.

The extraction valve according to the invention is particularly reliable on maintenance because said hook may be made alternatively of shaped sheet by precision casting or of plastic material.

The uncoupling operations between the extraction valve of the invention and a keg on which it is applied, are carried out with great safety because a wrench is associated to said extraction valve during the uncoupling operations from said keg, said wrench having a control rod which will be interposed between said hook and the inner wall of said body on which the hook is resting, so that said hook opposing and compressing said second spring is retracted with the walls inside the body allowing extraction of the valve from the keg.

The uncoupling operations between said extraction valve and the keg on which it is applied, will be carried out with the greatest simplicity because the position of said hook has a location mark on the outer surface of said ring so as to insert said dismounting wrench in a proper position on said extraction valve so that it can be oriented on said location mark or because there is a fixed position of said hook relative to the coupling system of the wrench.

Further characteristics, advantages and details of the extraction valve for kegs containing pressurized liquids according to the invention, will be better understood by reading the following description with reference to the accompanying drawings in which a preferred embodiment is shown as an illustrative but non-limiting example.

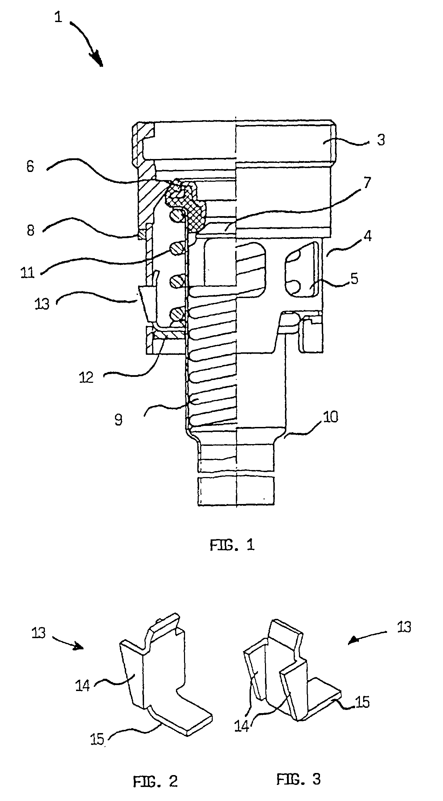

Fig. 1 is a partially sectional vertical view of an extraction valve according to the invention.

Fig. 2 is a perspective view of a detail of the extraction valve shown in Fig. 1.

Fig. 3 is another perspective view of the detail shown in Fig. 2.

Fig. 4 is a partially sectional vertical view of the valve of the invention when fixed on the keg.

Fig. 5 is a partially sectional vertical view of the valve of the invention showing the action of its safety device.

Fig. 6 is a vertical view of the valve of the invention in the working position just before beginning the demounting action from the keg.

Fig. 7 is an enlarged sectional view of a detail of the valve shown in Fig. 6.

Fig. 8 is an enlarged sectional view of the detail shown in Fig. 7 during the uncoupling action of said valve from the keg.

With reference to the above mentioned Figs. of the drawings, the extraction valve 1 for kegs 2 containing pressurized liquids comprises a threaded ring 3 at the coupling end with the keg 2-and having at the opposite end a body or cap 4 with its lateral surface shaped by a plurality of ports 5. Said ring 3 has an external sealing gasket 8 and on the bottom of said ring 3 the valve body 6 is lodged to which a plug 7 is superposed. A first spring 9 inside a draft pipe 10 associated to said valve body 6 is associated to said plug 7.

Outside said pipe 10 a second spring 11 is associated which at one end rests on the outer mouth of the pipe in contact with the valve body 5, while at the other end the spring is associated to a washer 12 that when mounted is connected to the body 4 of ring 3.

An anti-ejection safety device operatively associated to the body 4 provides for receiving on said body 4 a hook 13 preferably made of shaped and bent sheet, that can also be made by precision casting or of plastic material for its functional features.

Said hook 13 has one or more and preferably two projecting walls 14, which are adapted to be coupled with some of said ports 5 and a plane 15 adapted to rest on said washer 12 opposing the outer wall of pipe 10. On said plane also said second spring associated to pipe 10 and washer 12 is resting in such a way that the elastic force of the second spring 11 holds the hook 13 in position during operation of the extraction valve 1.

The operation of valve 1 of the invention is generally identical to the operation of many valves already available on the market. A mechanical device of known type and not shown in the drawings is associated to the ring and allows gas inlet and outlet of liquid contained in the keg.

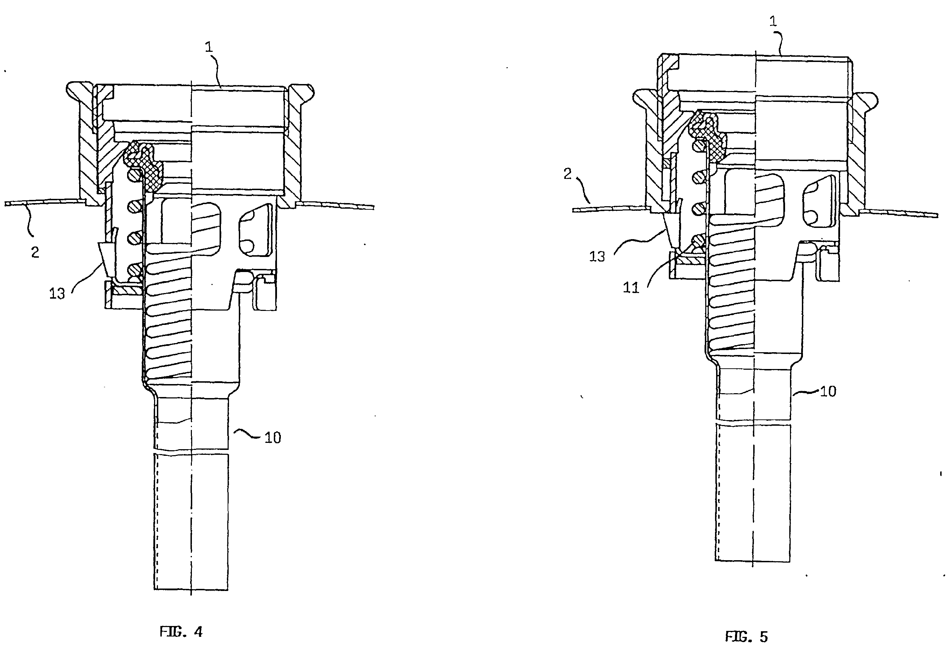

However the operation of the safety device avoiding the accidental ejection of the valve because of the residual gases is totally different. When the extraction valve 1 is unscrewed and residual gas is present in the keg, the hook 13 is opposed by the outer filling union of keg 2 as shown in Fig. 5 and prevents ejection of said extraction valve 1.

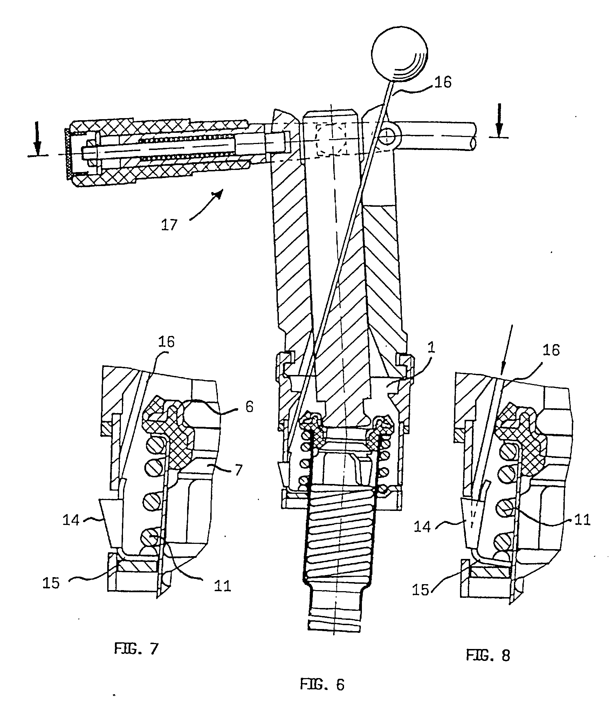

When the extraction valve 1 must be removed for carrying-out maintenance, with a proper demounting wrench 17 as shown in Fig. 6 it is possible to open gas passage so as to balance the pressure between external environment and interior of the keg now empty of liquids to be delivered. When the balance pressure is reached, a control rod 16 separate from or integral with said demounting wrench, is inserted between the hook 13 and the inner wall of body 4 on which the hook is resting. In this way the hook 13 opposing and compressing the second spring 11 is retracted with the walls 14 inside the body 4 and allows the valve 1 to be extracted from the keg 2.

Said wrench 17 will be adapted to make the demounting operations easier, for instance displacing laterally the pipe, or with out-of-alignment movements or even with suitable cams or chutes.

The position of the hook 13 must have a location mark on the outer surface of the ring 3 so as to insert the demounting wrench 17 in the proper position.

This wrench can than be oriented on said location mark or there will be a fixed position of the hook 13 relative to the connection system for the wrench 17.

As one can note from the foregoing, the extraction valve 1 overcomes the problems of the prior art devices, because as elastic member of the hook which is the main element of the safety device, the spring associated to the draft pipe and the washer holding the group comprising valve body, plug, spring and draft pipe is being used. In this way said hook can be particularly strong because elastic features are no more required and moreover the assembly in its seat does not show special difficulty, so that a simple and safe maintenance also by the user is warranted.

It is clear that many modifications, adaptations, integrations, variations and substitution may be made to the embodiment hereinbefore described as illustrative and non-limiting example, without falling however outside the scope of the present invention as defined by the following appended claims.

## Claims

1. An extraction valve for kegs containing pressurized liquids comprising a threaded ring (3) at one coupling end with a keg (2) and having at the other end a body (4) with its lateral surface shaped by a plurality of ports (5), said ring being associated at its bottom with a valve body (6) to which a plug (7) is superposed which is associated to a first spring (9) inside a draft pipe (10) associated to said valve body (6), wherein outside said pipe (10) a second spring (11) is associated in turn in contact with a washer (12) that when mounted is connected to-the body (4) of the ring (3), said body (4) being operatively associated to an anti-ejection safety device, **characterized in that** said safety device comprises a hook (13) having one or more projecting walls (14) adapted to be coupled with some of said ports (5), and a plane (15) adapted to rest on said washer (12) opposing the outer wall of said pipe (10), wherein on said plane said second spring (11) is resting, so that the elastic force of the second spring (11) keeps said hook (13) in position during operation of said extraction valve (1).

2. The extraction valve for kegs containing pressurized liquids according to claim 1), **characterized in that** said hook (13) may be alternatively made of shaped sheet by precision casting or of plastic material.

3. The extraction valve for kegs containing pressurized liquids according to claim 1), **characterized in that** a demounting wrench (17) is associated to said extraction valve (1) during the demounting operations from a keg (2), said wrench having a control rod (16), wherein said rod (16) is interposed between said hook (13) and the inner wall of said body (4) on which the hook (13) is resting, so that said hook (13) opposing and compressing said second spring (11) is retracted with the walls (14) inside the body (4) allowing extraction of the extraction valve (1) from said keg (2).

4. The extraction valve for kegs containing pressurized liquids according to claim 3), **characterized in that** the position of said hook (13) has a location mark on the outer surface of said ring (3) so as to insert said demounting wrench (17) in a proper position on said extraction valve (1) so that it can be oriented on said location mark.

5. The extraction valve for kegs containing pressurized liquids according to claim 3), **characterized in that** a fixed position of said hook relative to the connection system of said wrench (17) is provided.
